Europäisches Patentamt

European Patent Office

Office européen des brevets

(19)

(11) Publication number: **0 516 323 A1**

# EUROPEAN PATENT APPLICATION

(12)

(21) Application number: **92304504.1**

(22) Date of filing: **19.05.92**

(51) Int. Cl.5: **G06F 13/40**

(30) Priority: **28.05.91 US 706425**
**06.06.91 US 711672**

(43) Date of publication of application:
**02.12.92 Bulletin 92/49**

(84) Designated Contracting States:
**DE FR GB IT**

(71) Applicant: **International Business Machines
Corporation
Old Orchard Road**

**Armonk, N.Y. 10504(US)**

(72) Inventor: **Smith, Bruce Alan**
**15733 112th Drive North**
**Jupiter, Florida 33478(US)**

(74) Representative: **Blakemore, Frederick Norman**
**IBM United Kingdom Limited Intellectual
Property Department Hursley Park
Winchester Hampshire SO21 2JN(GB)**

(54) **Personal computer systems.**

(57) A personal computer has a high speed local processor data bus 34 having a plurality of signal conducting pathways, a microprocessor 32 coupled directly to the signal conducting pathways of the local processor bus 34 and a connector coupled directly to all of the signal conducting pathways of the local processor bus which are coupled directly to the microprocessor for accommodating reception of an alternate processor 60 to be coupled to at least certain ones of the signal conducting pathways. The personal computer provides capability for the ready substitution for or supplement of the usual controlling processor.

Fig. 3

This invention relates to personal computer systems.

Personal computer systems in general and IBM personal computers in particular have attained widespread use. A personal computer system can usually be defined as a desk top, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a motherboard or system planar to connect these components together. These systems are designed primarily to give independent computing power to a single user and are inexpensively priced for purchase by individuals or small businesses. Examples of such personal computer systems are IBM PERSONAL COMPUTER AT and IBM PERSONAL SYSTEM/2 Models 25, 30, L40SX, 50, 55, 65, 70, 80, 90 and 95.

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM MICRO CHANNEL bus architecture exemplified by IBM PERSONAL SYSTEM/2 Models 50 to 95. In the beginning, the Family I models typically used the popular Intel 8088 or 8086 microprocessor as the system processor. These processors have the ability to address one megabyte of memory. Later Family I models and the Family II models typically use the higher speed Intel 80286, 80386, and 80486 microprocessors which can operate in a real mode to emulate the slower speed Intel 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

As personal computer technology has developed and moved from eight to sixteen and eventually thirty two bit wide bus interaction and higher speed microprocessors capable of real and protected mode operation, performance capability has been sought by separating the architecture of the personal computer into varying bus areas. More specifically, in the original IBM PC the expansion bus was essentially a direct extension of the microprocessor (8086 or 8088) connections, buffered and demultiplexed as required. Later, as the AT bus specification was developed and came into wide use (now being also known as the Industry Standard Architecture or ISA), it became possible to sever the nearly direct connection between the microprocessor and the bus, giving rise to the presence of a local processor bus and the renaming of the expansion bus as the input/output bus. Typically, in order to enhance performance, the local processor bus runs at a higher clock speed (typically expressed in Hertz) than does the input/output bus. The IBM AT architecture also opened the possibility of running more than one microprocessor on the input/output bus, through use of direct memory access (DMA) interrupts.

As enhanced performance capability has continued to be a goal, and as faster clock speeds have become attainable for microprocessors, strategies have evolved in which it has become desirable to accommodate alternate system controllers which may, under appropriate circumstances, assume control of systems into which the controllers are inserted. For example, the provision of a processor upgrade card or board is one example of such a strategy. Heretofore, such strategies have usually contemplated the substitution of the upgraded component for the component previously used. Such substitution is acceptable where components are received in socket connectors permitting ready interchange. However, where components are soldered in place on circuit boards (as is the case with a surface mount Intel 80386SX) such substitution is less feasible or impossible. In particular, mere addition of another device normally will result in unacceptable contention for control of system resources and bus access.

With the foregoing in mind, it is an object of this invention to provide for the use of an alternate system controller (such as an upgraded processor) while maintaining the prior system controller. In realising this object of the present invention, a system is provided with capability for ready substitution for or supplement of the normal system controller.

A further object of this invention is to provide for the use of a variety of alternate or supplemental system controllers. In realising this object of the present invention, provision is made for the use of a number of types of alternate system controllers, specifically including emulators which may be used only temporarily as an aid in development, numeric or math co-processors, and upgraded system processors.

According to the invention, a personal computer system comprises a personal computer system comprising a high speed local processor data bus having a plurality of signal conducting pathways, a microprocessor coupled directly to the signal conducting pathways of the local processor bus, and a connector coupled directly to all the signal conducting pathways of the local processor bus which are coupled directly to the microprocessor for accommodating reception of an alternate processor to be coupled to at least certain ones of the signal conducting pathways.

The scope of the invention is defined by the appended claims; and how it can be carried into effect is hereinafter particularly described with reference to the accompanying drawings, in which:

Figure 1 is a perspective view of a personal computer embodying this invention;

Figure 2 is an exploded perspective view of certain elements of the personal computer of Figure 1; and

Figure 3 is a block diagram of certain components of the personal computer of Figures 1 and 2.

In personal computer technology a "master" is a processor or any circuit designed to gain control over a bus and drive address, data and control signals on the bus. Having such capability enables a master to transfer information between system memory and other devices. Masters may be divided into three types -- system master (usually the CPU), DMA controller, and bus master. The system master controls and manages the system configuration, and is usually the default master in the system. The default master owns the bus when no other master requires it. A DMA master is a special type of master which transfers data between DMA slaves and memory slaves, and does not arbitrate for the bus but services the DMA slave that is the arbitrator. A bus master arbitrates for use of the bus and supports information transfers with an I/O slave or memory slave.

Bus masters do not necessarily require a processor. Also, a bus master may be called on to respond as a slave when accessed by another bus master. A bus master is distinguished by the capability of gaining control of the bus through arbitration and controlling the execution of a defined bus cycle. Generally, there are three types of bus masters: full function, special function controllers, and programmable special function controllers. The fundamental differences among them are degrees of flexibility, function and cost. The full function bus master is the most flexible, has the most function, and costs most. Typically, a full function bus master will have its own programmable CPU and be capable of controlling all system resources, including operating system software. Special function controllers have the least flexibility, function and cost. Typically, a special function controller will use logic circuits but no CPU to perform a specific function while requiring little or no assistance from other masters. Programmable special function controllers span the range between the other two. The fundamental difference between special function and programmable special function controllers is the ability to modify the function and/or execution characteristics of the bus master. Such modification can be accomplished through use of processing units or through settable registers.

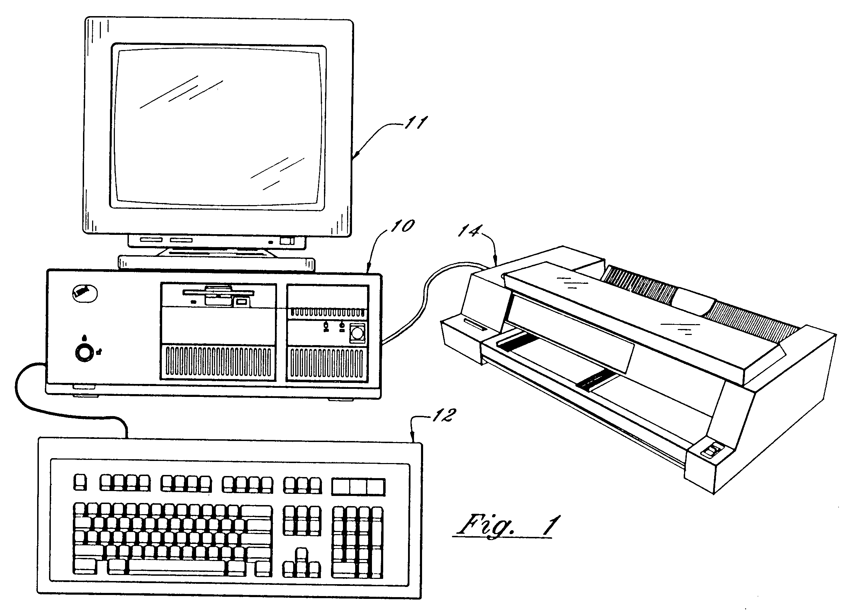

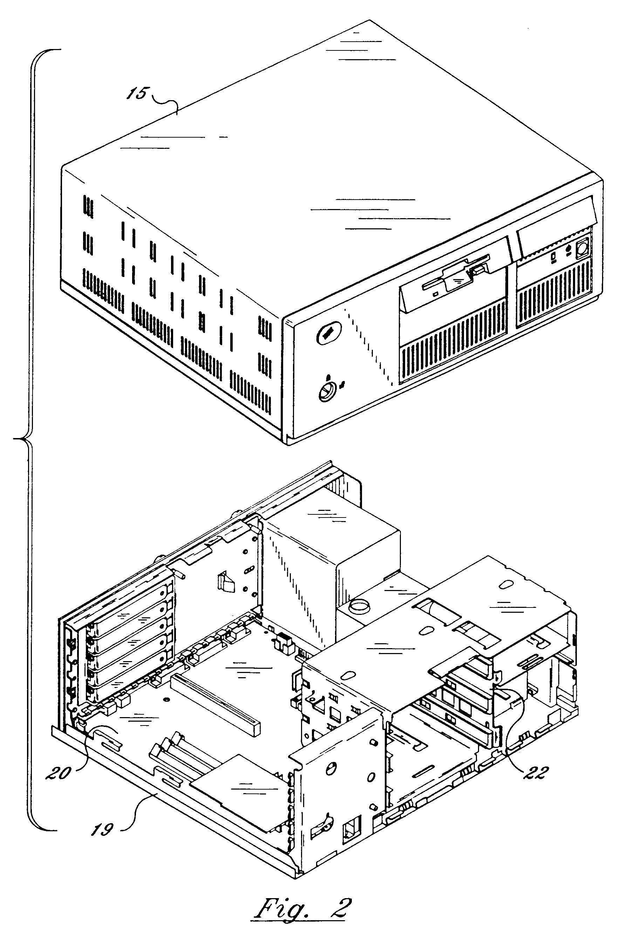

A microcomputer 10 (Figure 1) embodying the present invention has an associated monitor 11, keyboard 12 and printer or plotter 14. The computer 10 (Fig. 2) has a cover 15 which cooperates with a chassis 19 in defining an enclosed, shielded volume for receiving electrically powered data processing and storage components for processing and storing digital data. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base and a rear panel and defines at least one open bay for receiving a data storage device such as a disk drive for magnetic or optical disks, a tape backup drive, or the like. In the illustrated form, an upper bay 22 is adapted to receive a peripheral drive of a first size (such as one known as a 3.5 inch drive). A floppy disk drive, a removable media direct access storage device capable of receiving a diskette inserted thereinto and using the diskette to receive, store and deliver data as is generally known, may be provided in the upper bay 22.

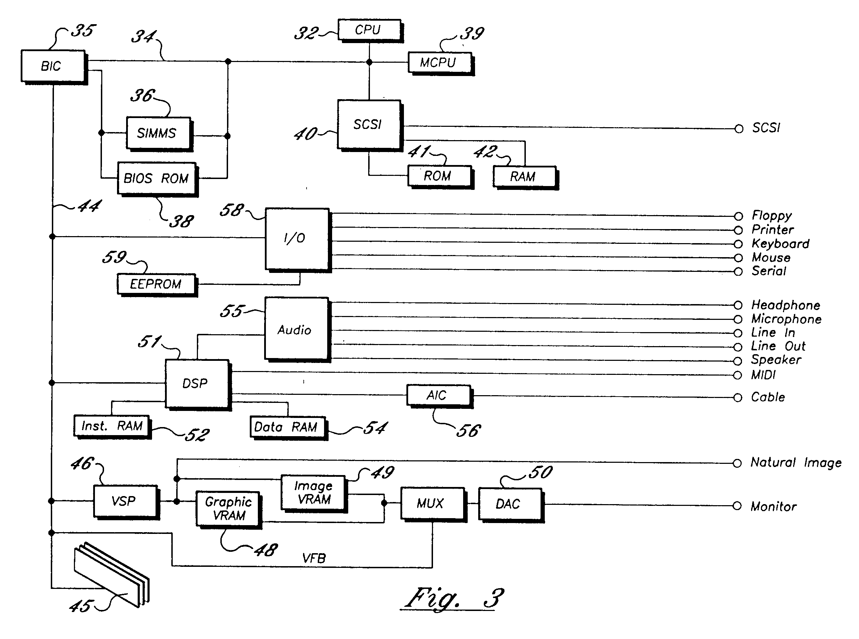

Connected to the planar 20 is a system processor CPU 32 (Fig. 3). While any appropriate microprocessor can be used as the CPU 32, one suitable microprocessor is the Intel 80386SX which is a surface mount microprocessor which is soldered in place on the motherboard 20. The system processor could be an Intel 80386 or 80486 microprocessor. The CPU 32 is connected by a high speed CPU local bus 34 to a bus interface control unit or BIC 35, to volatile random access memory (RAM) 36 here shown as single inline memory modules (SIMMS) and to read only memory BIOS ROM 38 in which are stored instructions for basic input/output operations to the CPU 32. The BIOS ROM 38 includes the BIOS that is used to interface between the I/O devices and the operating system of the microprocessor 32. Instructions stored in ROM 38 can be copied into RAM 36 to decrease the execution time of BIOS.

The CPU local bus 34 (comprising data, address and control components and a plurality of signal conducting pathways) also provides for the connection of the microprocessor 32 to a numeric or math coprocessor 39 and a small computer systems interface controller (SCSI) 40. The controller SCSI 40 may be connected or connectable to read only memory ROM 41, random access memory RAM 42, and suitable external devices of a variety of types as indicated by the I/O connection. The controller SCSI 40 functions as a storage controller in controlling storage memory devices such as fixed or removable media electromagnetic storage devices (also known as hard and floppy disk drives), electro-optical, tape and other storage devices.

The bus interface controller BIC 35 couples the CPU local bus 34 to an I/O bus 44 and functions as a protocol translator, memory controller and DNA controller among other functions. By means of the bus 44, the BIC 35 is coupled with an optional feature bus such as a MICRO CHANNEL bus having a plurality of I/O slots for receiving MICRO CHANNEL adapter cards 45 which may be further connected to an I/O device or memory (not shown). The I/O bus 44 includes address, data, and control components. The I/O bus 44 may be configured to bus specifications other than the MICRO CHANNEL specification.

Coupled along the I/O bus 44 is a variety of I/O components such as a video signal processor VSP 46 which is associated with video graphic VRAM 48 for storing character based information and image RAM 49 for storing graphic or image based information. Video signals exchanged with the processor VSP 46 may be passed through a digital to analog converter DAC 50 to a monitor or other display device. Provision is also made for connecting the VSP 46 direct to a natural image input/output, which may take the form of a video recorder/player, camera, etc. The I/O bus 44 is also coupled to a digital signal processor DSP 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller AIC 56. The I/O bus 44 is also coupled to an input/output controller I/O 58 with associated electrical erasable programmable read only memory EEPROM 59 by which inputs and outputs are exchanged with conventional peripherals including floppy disk drives, a printer or plotter 14, keyboard 12, a mouse or pointing device (not shown), and by means of a serial port.

The CPU 32 and controller SCSI 40 may function as masters directly coupled to or on the local bus 34, while the I/O controller 58, DSP 51, VSP 46 and possibly accessory boards 45 mounted in the MICRO CHANNEL slots may all function as masters directly coupled to or on the input/output bus 44.

The present invention enables an alternate processor or alternate system controller 60 to be directly coupled to or on the local processor bus, accessing the conductive pathways of the local processor bus as fully as does the CPU 32. A personal computer in accordance with this invention has a connector coupled directly to the local processor bus 34 for accommodating reception of an alternate processor 60. In a preferred form of the present invention, advantage is taken of the packaging of a numeric co-processor such as would be used as the math co-processor 39 in a plastic leaded chip carrier. It has become conventional to provide a connector for such a device in the form of a socket which uses the two outer rows of an 11x11 pin grid array type footprint. Conventionally, the remaining rows are unused. The presence of the MCPU 39 (Figure 3) would normally be accommodated through use of such a socket connector and possibly an intermediate adapter connector. A typical numeric co-processor uses less than all of the one hundred and twenty one possible pin connections in such a socket, typically using sixty eight.

However, those connections normally include the local processor bus data signals and several control signals.

In order to accommodate an alternate processor 60 which is to be as fully coupled to the local processor bus as is the CPU 32, in accordance with this invention, additional signals are brought into the connector pin locations (in the inner rows) otherwise unused by the MCPU 39. Those pin connector locations are those used by alternate processors or system controllers, making all signals necessary to implementation of this invention available. At the same time, those signal pathways needed only for a numeric co-processor remain located appropriately (in the outer two rows) for the installation of such a device.

The alternate system controller 60 may take one of several forms. In particular, the ASC may be an in circuit emulator used for testing and evaluation of the computer system 10 and of software operating on the system. Alternatively, the ASC may be a cache processor subsystem allowing for cache handling of data and performance comparisons without change in the CPU 32. Further, the ASC may be an upgraded processor enhancing the performance of the system 10. In any such instance, the present invention enables such an ASC, when present, to access fully the local processor bus 34 and participate in arbitration which may occur on that bus and access to system resources through that bus. Such access may range from processing in support of the existing system processor or CPU 32 to complete substitution therefor in the instance of a processor upgrade.

The described personal computers has the capability to provide for the ready substitution for or supplement of the usual system controlling processor.

Further details of the described computer system are to be found in four applications file contemporaneously with this application based upon USSN 706425, 706490, 706534 and 706602, which applications are incorporated herein by reference.

**Claims**

1. A personal computer system comprising a high speed local processor data bus (34) having a plurality of signal conducting pathways, a microprocessor (32) coupled directly to the signal conducting pathways of the local processor bus, and a connector coupled directly to all the signal conducting pathways of the local processor bus (34) which are coupled directly to the microprocessor for accommodating reception of an alternate processor (60) to be coupled to at least certain ones of the signal conducting pathways.

2. A system according to claim 1, including

    an input/output data bus;

    volatile memory (36) coupled to the high speed data base (34) for volatile storage of data, storage memory devices (41) for non-volatile storage of data, a storage controller (40) coupled to the high speed data bus (34) and to the storage memory devices (41) for regulating communications therebetween,

    and a bus interface controller (35) coupled to the high speed data bus (34) and to the input/output data bus (44) for providing communications therebetween.

3. A system according to claim 1 or 2, including an input/output controller (58), a digital signal processor (51) and a video signal processor (46), each coupled directly to the input/output data bus.

4. A system according to claim 1, 2 or 3, including an alternate system controller (60) mounted in the connector.

5. A system according to claim 4, wherein the alternate system controller (60) is an in-circuit emulator.

6. A system according to claim 4, wherein the alternate system controller (60) is a cache processor.

7. A system according to claim 4, wherein the alternate system controller (60) is a high performance microprocessor.

Fig. 1

*Fig. 2*

Fig. 3

SCSI

Floppy
Printer
Keyboard
Mouse
Serial

Headphone
Microphone
Line In
Line Out
Speaker
MIDI
Cable

Natural Image
Monitor

CPU 32
MCPU 39
CPU
SCSI 40
ROM 41
RAM 42
BIC 35
34
SIMMS 36
BIOS ROM 38
I/O 58
EEPROM 59
44
Audio 55
AIC 56
DSP 51
Inst. RAM 52
Data RAM 54
VSP 46
45
Graphic VRAM 48
Image VRAM 49
MUX
DAC 50
VFB

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y | EP-A-0 411 806 (ADVANCED LOGIC RESEARCH INC.)<br>* page 3, line 12 - line 49 *<br>* page 18, line 32 - page 19, line 14 *<br>* page 4, line 53 - page 5, line 17; figure 1 *<br>--- | 1,4,7<br>2,3,5,6 | G06F13/40 |
| X | EP-A-0 351 961 (INTERNATIONAL BUSINESS MACHINES INTERNATIONAL)<br>* page 3, left column, line 4 - right column, line 16; figure 1 *<br>* page 4, left column, line 40 - right column, line 11 *<br>--- | 1 | |
| X | EP-A-0 177 848 (HONEYWELL BULL INC.)<br>* page 3, line 27 - page 5, line 25; figures 1A,1B *<br>--- | 1 | |
| Y | EP-A-0 343 770 (INTERNATIONAL BUSINESS MACHINES CORPORATION)<br>* page 5, line 33 - line 40; figures 2,4 *<br>--- | 2,3,6 | |
| Y | EP-A-0 395 469 (TELEMATIQUE VIDEOTEX FRANCAISE T.V.F.)<br>* page 7, right column, line 49 - page 8, left column, line 27; figure 2 *<br>----- | 5 | **TECHNICAL FIELDS SEARCHED (Int. Cl.5)**<br><br>G06F |

The present search report has been drawn up for all claims

| Place of search | Date of completion of the search | Examiner |
|---|---|---|
| THE HAGUE | 15 SEPTEMBER 1992 | JONES H.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)